# EUROPEAN PATENT SPECIFICATION

(11) **EP 4 365 415 B1**
(45) Date of publication and mention of the grant of the patent: **21.10.2026**
(21) Application number: 23208214.9
(22) Date of filing: 07.11.2023
(51) Int. Cl.: F01D 25/16, B22F 10/28, B22F 10/47, F01D 25/18, F02C 7/06

(54) **BEARING CHAMBER WITH ANNULAR OIL DISTRIBUTOR**
LAGERKAMMER MIT RINGFÖRMIGEM ÖLVERTEILER
CHAMBRE DE PALIER AVEC DISTRIBUTEUR D'HUILE ANNULAIRE

(30) Priority: 07.11.2022 US 202263423381 P
(43) Date of publication of application: 08.05.2024
(73) Proprietor: RTX Corporation, Farmington, CT 06032 (US)
(72) Inventor: BINEK, Lawrence A., Farmington, 06032 (US); RAMSEY, Christopher D., Farmington, 06032 (US)
(74) Representative: Dehns

(56) References cited:
- EP-A1- 4 102 033
- EP-B1- 2 940 324
- DE-A1- 102018 202 494
- US-A1- 2020 080 445
- US-A1- 2021 062 679
- US-A1- 2022 235 672

## Description

### TECHNICAL FIELD

Exemplary embodiments of the present invention relate generally to gas turbine engines, in particular to a bearing chamber comprising an oil distributor and to a method of manufacturing a bearing chamber to include an oil distributor.

### BACKGROUND

In a gas turbine engine, air is compressed in a compressor and compressor air is then mixed with fuel and combusted in a combustor to produce a high-temperture and high-pressure working fluid. This working fluid is directed into a turbine in which the working fluid is expanded to generate power. The generated power drives the rotation of a rotor within the turbine through aerodynamic interactions between the working fluid and turbine blades or airfoils. The rotor can be used to drive rotations of a propeller or to produce electricity in a generator.

Certain parts, such as a bearing chamber, in a gas turbine engine need a supply of oil for cooling. In conventional systems, this oil is supplied via nozzles. A problem with the conventional nozzles is that they are expensive and require significant numbers of additional parts for fastening the nozzles in place.

Accordingly, a need exists for improved oil distribution in a bearing chamber of a gas turbine engine.

US 2021/062679 discloses an additively manufactured bearing support having a bearing sleeve connected to the bearing support via a squirrel cage. Oil is guided through an oil feed channel integrally formed within the bearing support to the bearing sleeve to form a squeeze film.

DE 10 2018 20249 discloses a bearing chamber with a 3D oil feed channel integrally formed with the bearing chamber housing by additive manufacturing.

EP 2 940 324 discloses an additively manufactured squirrel cage having an integrated oil feed channel extending through the beams of the squirrel cage to a pocket in a bearing sleeve to form a squeeze film.

EP 4 102 033 (state of the art in accordance with Article 54(3) EPC) discloses a bearing chamber housing consisting of an outer ring connected to an inner ring by support ribs, and an oil supply system receiving oil from outside and guiding it through the ribs to a channel in the inner ring and then to oil feed nozzles.

US 2020/080445 discloses a bearing compartment receiving a separate squirrel cage type centering spring with an upper flange having an oil cooling passage.

US 2022/235672 discloses a bearing support with an integral oil feed line formed by additive manufacturing.

### BRIEF DESCRIPTION

According to an aspect of the invention, a bearing chamber is provided according to claim 1.

In a further embodiment, the outer annular manifold includes a squirrel cage with linear supports through which the pressurized oil is flowable.

In a further embodiment of any of the previous embodiments, each of the one or more support struts has a narrowing taper with decreasing radial distance from the inner annular manifold.

In a further embodiment of any of the previous embodiments, the interior facing surface is cylindrical and the holes are arrayed in a lattice along the interior facing surface.

In a further embodiment of any of the previous embodiments, the bearing chamber includes one or more nozzles.

In a further embodiment of any of the previous embodiments, each of the one or more nozzles is configured to output oil toward a surface of the bearing chamber.

In a further embodiment of any of the previous embodiments, the oil distributor and each of the one or more nozzles are configured to output oil toward a different surface of the bearing chamber.

According to another aspect, a method of manufacturing a bearing chamber to include an oil distributor is provided according to claim 8.

In a further embodiment, the method further includes additively manufacturing one or more nozzles integrally with the bearing chamber.

In a further embodiment of any of the previous embodiments, each of the one or more nozzles is configured to output oil toward a surface of the bearing chamber.

In a further embodiment of any of the previous embodiments, the oil distributor and each of the one or more nozzles are configured to output oil toward different surfaces of the bearing chamber.

These and other advantages and features will become more apparent from the following description taken in conjunction with the drawings.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a side view of a bearing chamber with an annular oil distributor in accordance with embodiments;
FIG. 3 is an enlarged view of the portion of FIG. 2 encompassed by the dashed line in FIG 2;
FIG. 4 is a perspective view of the annular oil distributor of FIGS. 3 and 4 provided as a squirrel cage in accordance with embodiments;
FIG. 5 is a cutaway perspective view of the annular oil distributor of FIG. 4 in accordance with embodiments;
FIG. 6 is a flow diagram illustrating a method of manufacturing a bearing chamber in accordance with embodiments;
FIG. 7 is a perspective view of a bearing chamber and an interior surface of the bearing chamber with a terminal block in accordance with embodiments;
FIG. 8 is a perspective view of the bearing chamber and the interior surface of the bearing chamber with the terminal block of FIG. 7 and an oil nozzle in accordance with embodiments;
FIG. 9 is a perspective view of the bearing chamber and the interior surface of the bearing chamber with the terminal block of FIG. 7 and an inteiror of the oil nozzle of FIG. 8 in accordance with embodiments; and
FIG. 10 is a flow diagram illustrating a method of additively manufacturing a bearing chamber in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

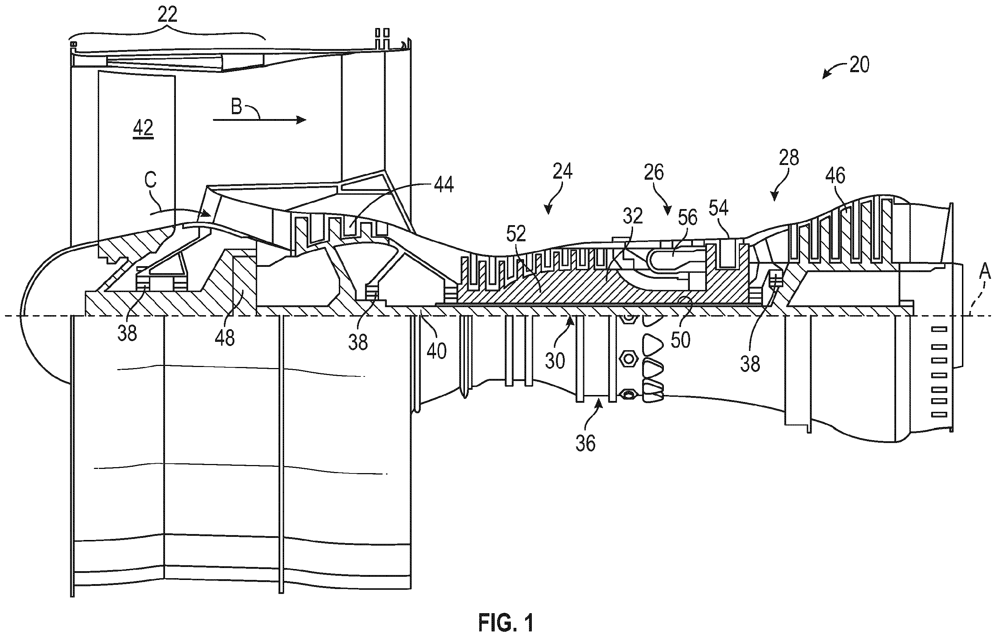

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in the gas turbine engine 20 between the high pressure compressor 52 and the high pressure turbine 54. The engine static structure 36 is arranged generally between the high pressure turbine 54 and the low pressure turbine 46. The engine static structure 36 further supports the bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 and then the high pressure compressor 52, is mixed and burned with fuel in the combustor 56 and is then expanded over the high pressure turbine 54 and the low pressure turbine 46. The high and low pressure turbines 54 and 46 rotationally drive the low speed spool 30 and the high speed spool 32, respectively, in response to the expansion. It will be appreciated that each of the positions of the fan section 22, compressor section 24, combustor section 26, turbine section 28, and fan drive gear system 48 may be varied. For example, geared architecture 48 may be located aft of the combustor section 26 or even aft of the turbine section 28, and the fan section 22 may be positioned forward or aft of the location of geared architecture 48.

Within the gas turbine engine 20, bearings are used to provide smooth relative rotation between the various shafts and non-rotating components and/or between two shafts which rotate at different speeds. An oil lubrication system can be provided that includes an oil pump, sometimes referred to as a main pump, and a network of conduits and nozzles to feed the bearings with oil. This oil is contained in bearing cavities, typically formed inside annular bearing chambers. A scavenge system having one or more scavenge lines extending from the bearing chambers and one or more scavenge pumps can be used to recover the oil, which can be in the form of an oil foam at that stage. Air/oil separation and filtering is typically provided for before returning the processed oil to the bearings.

In the bearing chambers, air and oil flows mix and generate a flow pattern about the engine central longitudinal axis A. The oil flow pattern generally operates as follows: Oil particles coalesce along internal bearing chamber partitions and form a liquid partition film which contains air bubbles. In the radial space between the rotating shaft and the liquid oil film, a mixture of air and dispersed oil particles swirl in a circumferential direction at a velocity greater than the liquid oil film flow along the partitions. As a result, the oil film flow is exposed to high shear stresses at the air/oil film interface. Film thickness and velocity distributions inside the bearing are driven by the magnitude of that interfacial shear and superimposed effects of gravitational forces.

To achieve bearing chamber functionality, air and oil flows are discharged to an oil scavenge system which communicates with the oil sump and which is partially formed within the bearing chamber.

As will be described below, an annular oil distributor of the gas turbine engine 20 of FIG. 1 is provided. The oil supply annulus can be integral to the rest of the bearing chamber body and is composed of network of channels (i.e., 50,000ths diameter). The channels may be fitted with converging/diverging breakout sections with the goal being to get better oil coverage in the bearing chamber. The oil supply annulus may have a built-in redundancy in a main artery. This can lead to a reduction in mass flow, but only a slight one. The oil supply annulus may have an outer manifold, an inner manifold (where the holes, which may have a conical opening, are located) that is disposed outstide of a rotating component and conical lines feeding oil from the outer manifold to the inner manifold. Oil is pressurized before it gets to the outer manifold. The nozzles of a conventional oil distribution system may not be replaced entirely by the annular oil distributor, or moved to other locations. A squirrel cage of the bearing chamber could serve as at least a part of the annular oil distributor. The squirrel cage is typically used for bearing support. In this case, channels for oil flow can be run through linear supports and the squirrel cage would be contiguous with the main body of the bearing chamber or provided with an interface.

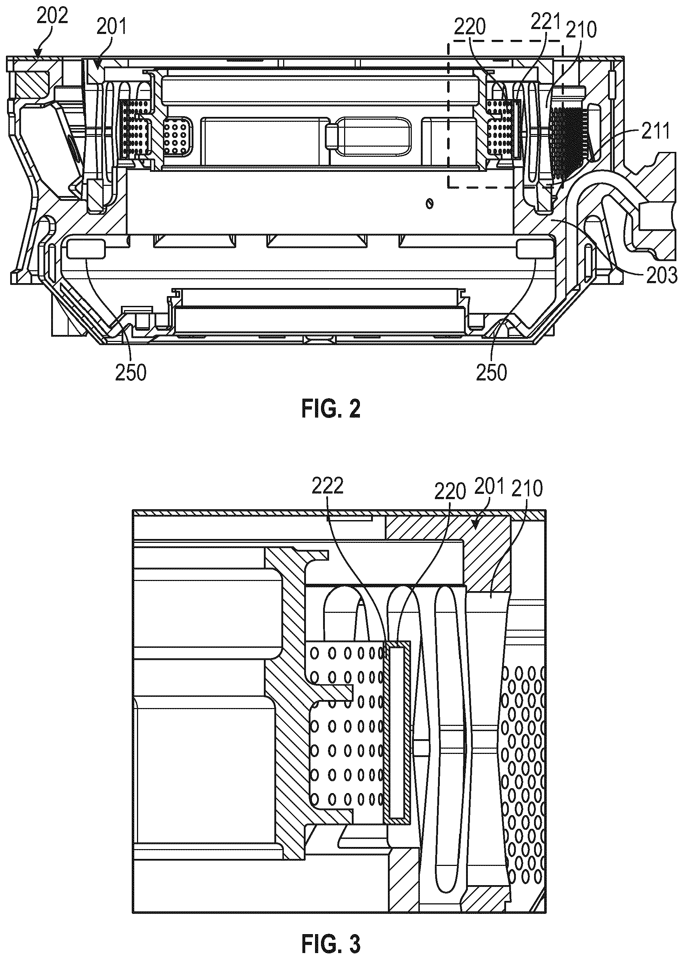

With continued reference to FIG. 1 and with additional reference to FIGS. 2-5, an annular oil distributor (hereinafter referred to as an "oil distributor") 201 is provided for a bearing chamber 202 of the gas turbine engine 20 of FIG. 1. The oil distributor 201 is additively manufactured with the bearing chamber 202 and can have a complex geometry as such.

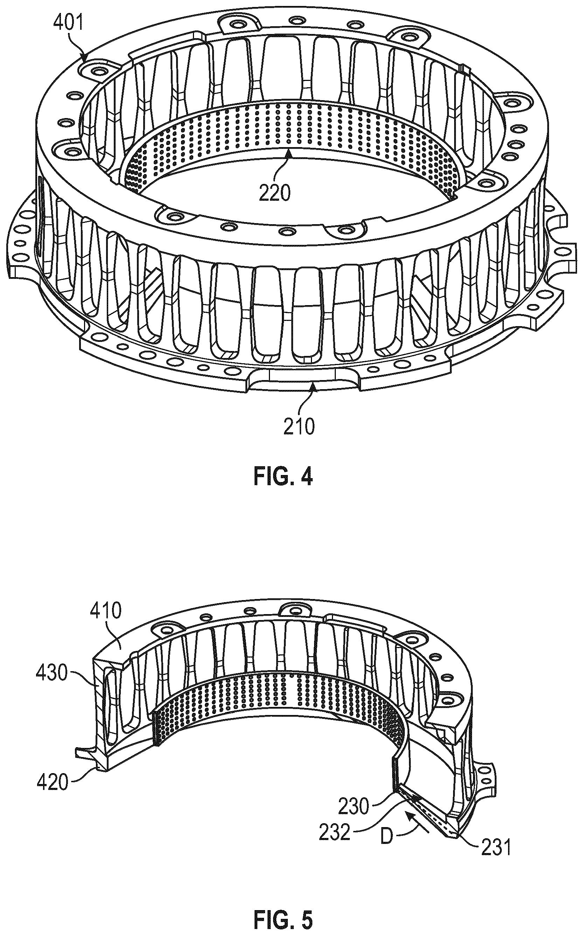

In any case, the oil distributor 201 includes an outer annular manifold 210, which is integrally formed with an interior surface 203 of the bearing chamber 202 and which is formed to define one or more first interior cavities 211 that are receptive of pressurized oil, and an inner annular manifold 220, which is formed to define a second interior cavity 221 and which includes an interior facing surface 222. The interior facing surface 222 can be substantially cylindrical and is formed to define a lattice array of holes that are respectively communicative with the second interior cavity 221. The oil distributor 201 further includes one or more support struts 230 (see FIG. 5) by which the inner annular manifold 220 is supported within the outer annular manifold 210. Each of the one or more support struts 230 is formed to define interior lines 231 by which the pressurized oil flows from the one or more first interior cavities 211 to the second interior cavity 221 and to the holes via the second interior cavity 221. In addition, each of the one or more support struts 230 has a narrowing taper 232 with decreasing radial distance D (see FIG. 5) from the inner annular manifold 220.

In accordance with embodiments and as shown in FIGS. 4 and 5, the outer annular manifold 210 can include or be provided as a squirrel cage 401 of the bearing chamber 202. In these or other cases, the outer annular manifold 210 can be provided as an upper manifold portion 410, a lower manifold portion 420 to which the one or more support struts 230 can be connected and an annular array of linear supports 430. Although FIG. 5 illustrates these features as solid, it is to be understood that the upper manifold portion 410, the lower maniold portion 420 and each of the linear supports 430 can be formed to including a hollow interior defining the one or more first interior cavities 211.

As such, pressurized oil can be received in the one or more first interior cavities 211 of the upper manifold portion 410, the lower manifold portion 420 and the annular array of linear supports 430 and then can be transferred to the second interior cavity 221 of the inner annular manifold 220 via the interior lines 231 of the one or more support struts 230. The pressurized oil can then flow out of the second interior cavity 221 via the holes to lubricate and cool the bearing chamber 202.

With continued reference to FIG. 2, the bearing chamber 202 can include the oil distributor 201 as described above as well as one or more nozzles 250 in a hybrid configuration. In these or other cases, the oil distributor 201 serves to lubricate and cool one section of the bearing chamber 202 (i.e., the upper section as shown in FIG. 2) while the one or more nozzle 250 serve to lubricate and cool another section or a different surface of the bearing chamber 202 (i.e., portions of the lower section as shown in FIG. 2). The presence or each feature type in the hybrid configuration allows for weight reduction in some cases as well as substantial oil distribution by the oil distributor 201 and targeted oil distribution by the one or more nozzles 250.

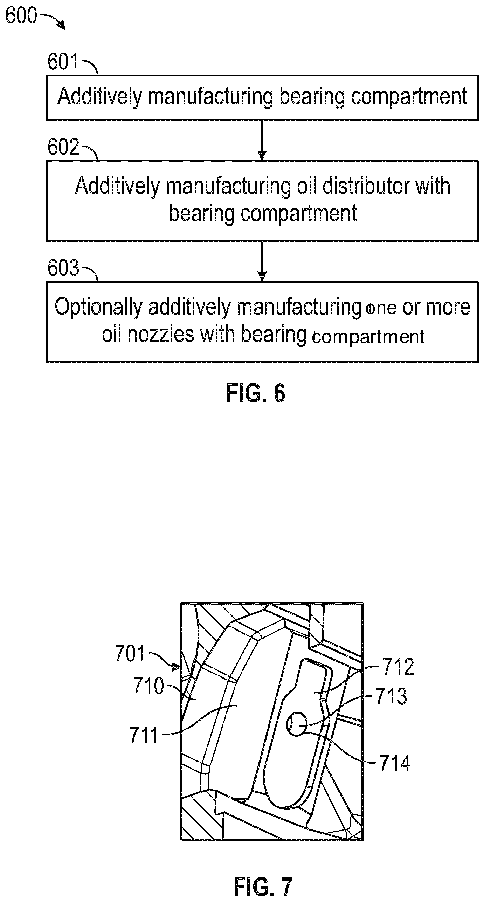

With reference to FIG. 6, a method 600 of manufacturing a bearing chamber, such as the bearing chamber 202 described above, is provided. The method 600 includes additively manufacturing the bearing chamber (block 601) and additively manufacturing an oil distributor integrally with the bearing chamber (block 602) where the oil distributor is provided as the oil distributor 201 described above. The method 600 can further include optionally additively manufacturing one or more oil nozzles with the bearing chamber (block 603).

With reference to FIGS. 7-9, a bearing chamber 701 is provided and includes an interior surface 710, which can be additively manufactured, and an oil nozzle 720 and/or the oil distributor 201 as described above, both of which can also be additively manufactured. The interior surface 710 includes a terminal block 711 that is formed to define a keyway 712 and a conduit 713. The conduit 713 extends through a body of the bearing chamber 701 and terminates at a terminus 714 at the keyway 712. The oil nozzle 720 is formed to define an internal channel 721 with an opening 722 (i.e., the internal channel 211 of FIG. 3A) and includes a base 723, with the oil distributor 201 having similar features. Both the keyway 712 and the base 723 can be elongate. In any case, the base 723 is tightly fittable in the keyway 712. The base 723 can also include a fastening point 724, at which the base 723 is fastened to the terminal block 711 at the keyway 712.

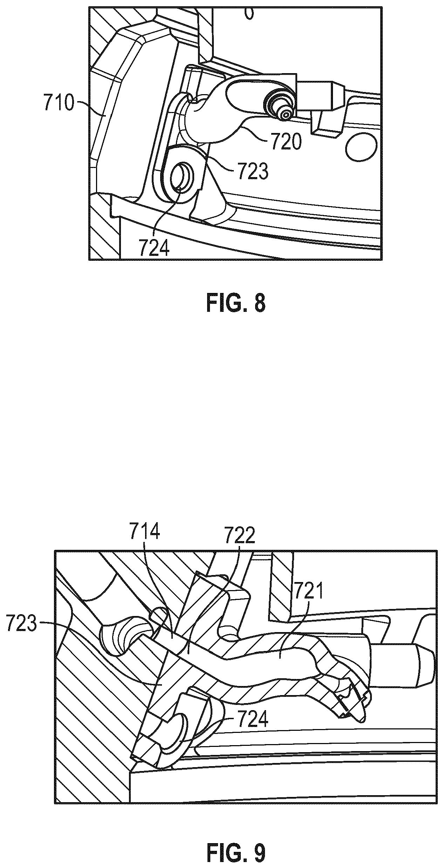

When the base 723 is tightly fit in the keyway 712 as shown in FIGS. 8 and 9, the opening 722 of the internal channel 721 sits flush against the terminus 714 of the conduit 713 whereby the internal channel 721 is fluidly communicative with the conduit 713. As such, oil or other fluids directed into and through the conduit 713 enter and flow through the internal channel 721. In addition, when the base 722 is tightly fit in the keyway 712, an orientation of the keyway 712 and a configuration of the oil nozzle 720/oil distributor 201 are cooperatively established to aim the oil nozzle 720/oil distributor 201 at one or more predefined targets within the bearing chamber 701. In this way, the orientation of the keyway 712 and the configuration of the oil nozzle 720/oil distributor 201 work cooperatively to aim a flow of oil or other fluids passing through the internal channel 721 toward the one or more predefined targets.

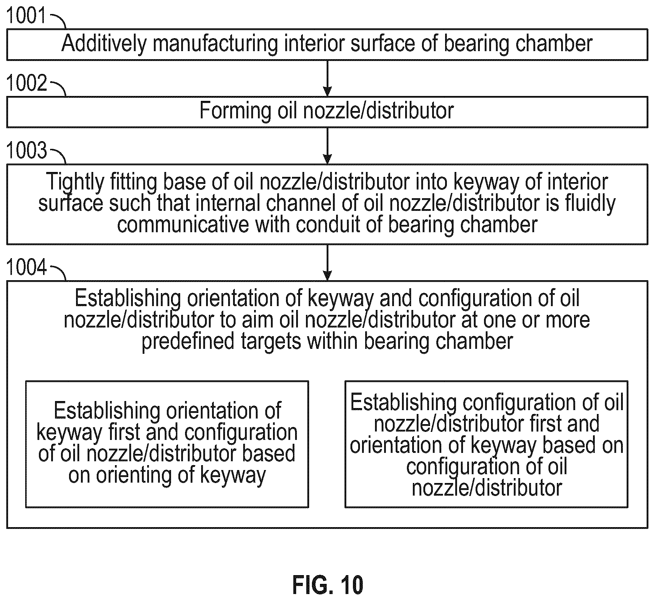

With reference to FIG. 10, a method of additively manufacturing a bearing chamber, such as the bearing chamber 701 of FIGS. 7-9, is provided. The method includes additively manufacturing an interior surface of the bearing chamber to include a terminal block defining a keyway and a conduit terminating at the keyway (block 1001) and forming an oil nozzle or distributor defining an internal channel and including a base (block 1002). The method further includes tightly fitting the base in the keyway such that the internal channel is fluidly communicative with the conduit (block 1003) and establishing an orientation of the keyway and a configuration of the oil nozzle or distributor to aim the oil nozzle or distributor at one or more predefined targets within the bearing chamber (block 1004).

In accordance with embodiments, in block 1004, the establishing of the orientation of the keyway can be set first and the configuration of the oil nozzle/distributor can be based on the orientating of the keyway or the establishing of the the configuration of the oil nozzle/distributor can be set first and the orientation of the keyway can be based on the configuration of the oil nozzle/distributor.

Benefits of the features described herein are the provision of an oil distributor that can provide lubrication and cooling for a bearing chamber. The oil distributor is formed integrally with the bearing chamber through the use of additive manufacturing that allows for complex geometries and fluid connnections. In some cases, the oil distributor can be paired with one or more nozzles for additional oil distribution in a hybrid configuration that can allow for substantial oil distribution by the oil distributor and targeted oil distribution by the one or more nozzles.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the claims.

In addition, many modifications may be made to adapt a particular situation or material to the teachings of the present invention without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. A bearing chamber (202) comprising an oil distributor (201), the oil distributor (201) comprising:
an outer annular manifold (210), which is integrally formed with an interior surface (203) of the bearing chamber (202) and which defines a first interior cavity (211) receptive of pressurized oil;
an inner annular manifold (220), which defines a second interior cavity (221) and comprises an interior facing surface (222) defining holes respectively communicative with the second interior cavity (221); and
one or more support struts (230) by which the inner annular manifold (220) is supported within the outer annular manifold (210),
each of the one or more support struts (230) defining interior lines (231) by which the pressurized oil flows from the first interior cavity (211) to the second interior cavity (221) and to the holes.

2. The bearing chamber (202) according to claim 1, wherein the outer annular manifold (210) comprises a squirrel cage (401) with linear supports (430) through which the pressurized oil is flowable.

3. The bearing chamber (202) according to claim 1 or 2, wherein each of the one or more support struts (230) has a narrowing taper (232) with decreasing radial distance from the inner annular manifold (220).

4. The bearing chamber (202) according to any preceding claim, wherein the interior facing surface (222) is cylindrical and the holes are arrayed in a lattice along the interior facing surface (222).

5. The bearing chamber (202) of any preceding claim, comprising one or more nozzles (250).

6. The bearing chamber (202) according to claim 5, wherein each of the one or more nozzles (250) is configured to output oil toward a surface of the bearing chamber (202).

7. The bearing chamber (202) according to claim 5, wherein the oil distributor (201) and each of the one or more nozzles (250) are configured to output oil toward a different surface of the bearing chamber (202).

8. A method of manufacturing a bearing chamber (202) to include an oil distributor (201), the method comprising:
additively manufacturing the bearing chamber (202); and
additively manufacturing the oil distributor (201) integrally with the bearing chamber (202), the oil distributor (201) comprising:
an outer annular manifold (210), which is integrally formed with an interior surface (203) of the bearing chamber (202) and which defines a first interior cavity (211) receptive of pressurized oil;
an inner annular manifold (220), which defines a second interior cavity (221) and comprises an interior facing surface (222) defining holes respectively communicative with the second interior cavity (221); and
one or more support struts (230) by which the inner annular manifold (220) is supported within the outer annular manifold (210),
each of the one or more support struts (230) defining interior lines (231) by which the pressurized oil flows from the first interior cavity (211) to the second interior cavity (221) and to the holes.

9. The method according to claim 8, further comprising additively manufacturing one or more nozzles (250) integrally with the bearing chamber (202).

10. The method according to claim 9, wherein each of the one or more nozzles (250) is configured to output oil toward a surface of the bearing chamber (202).

11. The method according to claim 9, wherein the oil distributor (201) and each of the one or more nozzles (250) are configured to output oil toward different surfaces of the bearing chamber (202).

## Patentansprüche

1. Lagerkammer (202), umfassend einen Ölverteiler (201), wobei der Ölverteiler (201) Folgendes umfasst:
ein äußeres ringförmiges Verteilerrohr (210), das einstückig mit einer Innenfläche (203) der Lagerkammer (202) ausgebildet ist und einen ersten Innenhohlraum (211) definiert, der druckbeaufschlagtes Öl aufnimmt;
ein inneres ringförmiges Verteilerrohr (220), das einen zweiten Innenhohlraum (221) definiert und eine nach innen weisende Oberfläche (222) umfasst, die Löcher definiert, die jeweils mit dem zweiten Innenhohlraum (221) in Verbindung stehen; und
eine oder mehrere Stützstreben (230), durch welche das innere ringförmige Verteilerrohr (220) innerhalb des äußeren ringförmigen Verteilerrohrs (210) gelagert ist,
wobei jede der einen oder mehreren Stützstreben (230) Innenleitungen (231) definiert, durch welche das druckbeaufschlagte Öl von dem ersten Innenhohlraum (211) zu dem zweiten Innenhohlraum (221) und zu den Löchern fließt.

2. Lagerkammer (202) nach Anspruch 1, wobei das äußere ringförmige Verteilerrohr (210) einen Käfigläufer (401) mit linearen Stützen (430) umfasst, durch welche das druckbeaufschlagte Öl fließen kann.

3. Lagerkammer (202) nach Anspruch 1 oder 2, wobei jede von der einen oder den mehreren Stützstreben (230) eine sich Beschränkungsverjüngung (232) mit abnehmendem radialem Abstand von dem inneren ringförmigen Verteilerrohr (220) aufweist.

4. Lagerkammer (202) nach einem der vorhergehenden Ansprüche, wobei die nach innen weisende Oberfläche (222) zylindrisch ist und die Löcher gitterförmig entlang der nach innen weisenden Oberfläche (222) angeordnet sind.

5. Lagerkammer (202) nach einem der vorhergehenden Ansprüche, umfassend eine oder mehrere Düsen (250).

6. Lagerkammer (202) nach Anspruch 5, wobei jede von der einen oder den mehreren Düsen (250) konfiguriert ist, um Öl in Richtung einer Oberfläche der Lagerkammer (202) auszugeben.

7. Lagerkammer (202) nach Anspruch 5, wobei der Ölverteiler (201) und jede von der einen oder den mehreren Düsen (250) konfiguriert sind, um Öl in Richtung einer anderen Oberfläche der Lagerkammer (202) auszugeben.

8. Verfahren zum Fertigen einer Lagerkammer (202) mit einem Ölverteiler (201), wobei das Verfahren Folgendes umfasst:
additives Fertigen der Lagerkammer (202); und
additives Fertigen des Ölverteilers (201) einstückig mit der Lagerkammer (202), wobei der Ölverteiler (201) Folgendes umfasst:
ein äußeres ringförmiges Verteilerrohr (210), das einstückig mit einer Innenfläche (203) der Lagerkammer (202) ausgebildet ist und einen ersten Innenhohlraum (211) definiert, der druckbeaufschlagtes Öl aufnimmt;
ein inneres ringförmiges Verteilerrohr (220), das einen zweiten Innenhohlraum (221) definiert und eine nach innen weisende Oberfläche (222) umfasst, die Löcher definiert, die jeweils mit dem zweiten Innenhohlraum (221) in Verbindung stehen; und
eine oder mehrere Stützstreben (230), durch welche das innere ringförmige Verteilerrohr (220) innerhalb des äußeren ringförmigen Verteilerrohrs (210) gelagert ist,
wobei jede der einen oder mehreren Stützstreben (230) Innenleitungen (231) definiert, durch welche das druckbeaufschlagte Öl von dem ersten Innenhohlraum (211) zu dem zweiten Innenhohlraum (221) und zu den Löchern fließt.

9. Verfahren nach Anspruch 8, ferner umfassend additives Fertigen einer oder mehrerer Düsen (250) einstückig mit der Lagerkammer (202).

10. Verfahren nach Anspruch 9, wobei jede von der einen oder den mehreren Düsen (250) konfiguriert ist, um Öl in Richtung einer Oberfläche der Lagerkammer (202) auszugeben.

11. Verfahren nach Anspruch 9, wobei der Ölverteiler (201) und jede von der einen oder den mehreren Düsen (250) konfiguriert sind, um Öl in Richtung anderer Oberflächen der Lagerkammer (202) auszugeben.

## Revendications

1. Chambre de palier (202) comprenant un distributeur d'huile (201), le distributeur d'huile (201) comprenant :
un collecteur annulaire extérieur (210), qui est formé d'un seul tenant avec une surface intérieure (203) de la chambre de palier (202) et qui définit une première cavité intérieure (211) réceptive à l'huile sous pression ;
un collecteur annulaire intérieur (220), qui définit une seconde cavité intérieure (221) et comprend une surface de face intérieure (222) définissant des trous communiquant respectivement avec la seconde cavité intérieure (221) ; et
une ou plusieurs entretoises de support (230) par lesquelles le collecteur annulaire intérieur (220) est supporté à l'intérieur du collecteur annulaire extérieur (210),
chacune de la une ou des plusieurs entretoises de support (230) définissant des lignes intérieures (231) par lesquelles l'huile sous pression s'écoule de la première cavité intérieure (211) à la seconde cavité intérieure (221) et aux trous.

2. Chambre de palier (202) selon la revendication 1, dans laquelle le collecteur annulaire extérieur (210) comprend une cage d'écureuil (401) avec des supports linéaires (430) à travers lesquels l'huile sous pression peut s'écouler.

3. Chambre de palier (202) selon la revendication 1 ou la revendication 2, dans laquelle chacune de la une ou des plusieurs entretoises de support (230) présente un rétrécissement conique (232) avec une distance radiale décroissante par rapport au collecteur annulaire intérieur (220).

4. Chambre de palier (202) selon une quelconque revendication précédente, dans laquelle la surface de face intérieure (222) est cylindrique et les trous sont disposés en réseau le long de la surface de face intérieure (222).

5. Chambre de palier (202) selon une quelconque revendication précédente, comprenant une ou plusieurs buses (250).

6. Chambre de palier (202) selon la revendication 5, dans laquelle chacune de la une ou des plusieurs buses (250) est configurée pour délivrer de l'huile vers une surface de la chambre de palier (202).

7. Chambre de palier (202) selon la revendication 5, dans laquelle le distributeur d'huile (201) et chacune de la une ou des plusieurs buses (250) sont configurés pour délivrer de l'huile vers une surface différente de la chambre de palier (202).

8. Procédé de fabrication d'une chambre de palier (202) comportant un distributeur d'huile (201), le procédé comprenant :
la fabrication additive de la chambre de palier (202) ; et
la fabrication additive du distributeur d'huile (201) d'un seul tenant avec la chambre de palier (202), le distributeur d'huile (201) comprenant :
un collecteur annulaire extérieur (210), qui est formé d'un seul tenant avec une surface intérieure (203) de la chambre de palier (202) et qui définit une première cavité intérieure (211) réceptive à l'huile sous pression ;
un collecteur annulaire intérieur (220), qui définit une seconde cavité intérieure (221) et comprend une surface de face intérieure (222) définissant des trous communiquant respectivement avec la seconde cavité intérieure (221) ; et
une ou plusieurs entretoises de support (230) par lesquelles le collecteur annulaire intérieur (220) est supporté à l'intérieur du collecteur annulaire extérieur (210),
chacune de la une ou des plusieurs entretoises de support (230) définissant des lignes intérieures (231) par lesquelles l'huile sous pression s'écoule de la première cavité intérieure (211) à la seconde cavité intérieure (221) et aux trous.

9. Procédé selon la revendication 8, comprenant en outre la fabrication additive d'une ou de plusieurs buses (250) d'un seul tenant avec la chambre de palier (202).

10. Procédé selon la revendication 9, dans lequel chacune de la une ou des plusieurs buses (250) est configurée pour délivrer de l'huile vers une surface de la chambre de palier (202).

11. Procédé selon la revendication 9, dans lequel le distributeur d'huile (201) et chacune de la une ou des plusieurs buses (250) sont configurés pour délivrer de l'huile vers des surfaces différentes de la chambre de palier (202).
